# NEUE EUROPÄISCHE PATENTSCHRIFT

(11) **EP 0 326 711 B2**
(45) Veröffentlichungstag und Bekanntmachung des Hinweises auf die Entscheidung über den Einspruch: **10.09.1997**
(45) Hinweis auf die Patenterteilung: 08.06.1994
(21) Anmeldenummer: 88121760.8
(22) Anmeldetag: 28.12.1988
(51) Int. Cl.: B32B 1/08, B32B 27/08, B32B 27/20, F16L 9/133, H02G 1/08

(54) **Rohr aus polymerem Werkstoff**
Polymeric piping
Tuyau en matériel polymère

(30) Priorität: 28.01.1988 DE 3802493
(43) Veröffentlichungstag der Anmeldung: 09.08.1989
(73) Patentinhaber: REHAU AG + Co, 95111 Rehau (DE)
(72) Erfinder:

(56) Entgegenhaltungen:
- EP-A- 0 359 128
- DE-A- 1 629 452
- DE-A- 2 752 969
- US-A- 3 847 728
- US-A- 4 299 256
- US-A- 4 565 351

## Beschreibung

Verfahren zur Herstellung eines Rohres aus polymeren Werkstoffen zur Aufnahme von Einzügen, wie Kabeln, Rohren und dergleichen durch Koextrusion von zwei konzentrischen Polymerschichten, wobei die innere Polymerschicht mit reibungsmindernden Additiven versehen ist.

Aus der DE-OS 35 39 304 ist ein Kunststoffrohr zur Aufnahme von Einzügen, insbesondere ein Kabelschutzrohr bekannt, welches eine zumindest bereichsweise von einem Gleitmittel benetzte Innenwandung aufweist. Die Innenwandung besitzt bei diesem Rohr eine Profilierung, welche das fertigungsseitig eingebrachte Gleitmittel in ihren Profilierungstälern festhält. Diese Profilierung verhindert, daß das Gleitmittel von einer glatten Rohrinnenwandung schon durch den ersten Kontakt mit einem Rohreinzug abgewischt wird. Das Gleitmittel besteht dabei aus einer Mischung von festen und flüssigen Bestandteilen, wobei die festen Bestandteile in eine ölige Substanz eingelagerte Mikrokugeln sind. Der Nachteil dieser bekannten Rohrausstattung wird darin gesehen, daß Rohre mit einer öligen Innenbeschichtung hergestellt werden, die beim Hantieren stören kann. Beim harten Aufsetzen eines solchen Rohres können Teile der Gleitmittelschicht darüberhinaus aus ihrem Sitz zwischen den Profilierungen herausgeschlagen werden, so daß nicht auszuschließen ist, daß wenigstens Teilbereiche der profilierten Rohroberfläche ohne Gleitmittelbeschichtung zum Einsatz gelangen.

Die DE-A 2 752 969 offenbart ein Installationsrohr aus zwei konzentrischen Polyethylenschichten, wobei der innere Rohrumfang durch Versetzen der inneren Polymerschicht mit einer definierten Menge eines reibungsmindernden Additivs an seiner Oberfläche gleitfähig gemacht ist.

Hier setzt die Erfindung ein, die es sich zur Aufgabe gestellt hat, ein derartiges Rohr anzugeben, bei dem weder eine Gefahr der Verschmutzung durch ölige Bestandteile der Gleitmittelschicht noch die Gefahr der Unterbrechung des Gleitmittelfilms durch Hantierung gegeben ist.

Erfindungsgemäß wird dazu vorgeschlagen, daß die äußere Polymerschicht als dickere Rohrwand mit einer über den inneren Umfang verlaufenden Profilierung extrudiert wird, und daß auf die innere Umfangsprofilierung der äußeren Polymerschicht die mit den reibungsmindernden Additiven versehene innere, im Querschnitt dünnere Polymerschicht aufextrudiert und durch Extrusionsverschweißen mit der äußeren Polymerschicht fest verbunden wird, wobei die innere Polymerschicht die Form der Innenprofilierung der äußeren Polymerschicht annimmt.

Erfindungsgemäß wird damit die Problematik der Gleitmittelauffragung in die innere, dünnere Rohrwandung verlegt. Der Vorteil wird darin gesehen, daß keine öligen Bestandteile mehr auf der Oberfläche des Rohrinneren vorhanden sind. Bei der Herstellung des erfindungsgemäßen Rohres im Wege der Koextrusion erhält die dickere Rohraußenschicht bereits am inneren Umfang eine Profilierung, über die dann die innere, mit den reibungsmindernden Additiven versehene Polymerschicht extrudiert wird. Diese innere Polymerschicht nimmt dann die Form der Innenprofilierung der äußeren Polymerschicht an.

Die äußere, dickere Polymerschicht des Rohres kann vorteilhaft aus einem Polyethylen, Polypropylen oder einem ähnlichen polymeren Werkstoff bestehen. Die innere, dünnere Polymerschicht sollte aus einem Polymeren hergestellt sein, welches mit einer annähernd gleichen Schmelztemperatur wie die äußere Polymerschicht ausgestattet ist. Auf diese Weise können die im Koextrusionsverfahren hergestellten Rohrschichten während des Herstellungsprozesses miteinander verschweißt werden, da beide Polymerschichten in ihrer Schmelzephase aufeinandergeführt werden und dadurch einstückig verschweißen.

Als reibungsmindernde Additive können der inneren, dünneren Polymerschicht Zusätze wie Molybdändisulfid, Graphit, Polytetrafluorethylen, Silikon und dergleichen zugesetzt werden. Es liegt im Rahmen der Erfindung auch eine Kombination mehrerer solcher Additive als reibungsmindernde Zusätze vorzusehen.

Als Mischungsverhältnis für die Erzeugung der inneren, dünneren Polymerschicht kann ein solches von 70 Gewichtsprozent polymerem Material und 30 Gewichtsprozent Additiven vorgesehen werden.

Die dickere, äußere Polymerschicht kann beispielsweise aus einem hochdichten Polyethylen aufgebaut werden, welches nach DIN 53 735 einen Schmelzindex (MFI) 190/5 von 0,2 bis 0,6 g/10 Min. und einen Kristallit-Schmelzpunkt von ca. 135°C aufweist. Es kann für die Herstellung dieser Schicht auch ein niedrigdichtes Polyethylen mit MFI 190/2,16 von 0,2-0,7 g/10 Min. und einen Kristallit-Schmelzpunkt von ca. 110°C verwendet werden. Auch ein mitteldichtes Polyethylen kann hier verwendet werden.

Wenn die äußere Polymerschicht aus Polypropylen hergestellt wird, beträgt der MFI 230/5 von 0,8-1,6 g/10 Min. und der Kristallit-Schmelzepunkt ca. 165°C. Bei mitteldichtem Polyethylen beträgt der MFI 190/2,16 von 0,3-0,8 g/10 Min. und der Kristallit-Schmelzepunkt ca. 125°C.

Die innere, dünnere Polymerschicht kann aus Polypropylen mit einem Additivzusatz von beispielsweise 18% Polytetrafluorethylen und 2% Silikon sein. Diese Schicht hat einen MFI 200/2,16 von 4-8 g/10 Min. und einen Kristallit-Schmelzepunkt von ca. 165°C.

Wird niedrigdichtes Polyethylen zur Innenbeschichtung verwendet, so soll ein Polymer mit einem MFI 190/2,16 zwischen 0,5 und 8 g/10 Min. vorgesehen werden. Wird für diese Innenbeschichtung hochdichtes Polyethylen verwendet, so beträgt dessen MFI 190/5 von 0,5 bis 12 g/ 10 Min., vorzugsweise 2-5 g/10 Min. und einen Kristallit-Schmelzepunkt von ca. 135°C. Bei mitteldichten Polyethylentypen sind solche zu verwenden, deren MFI von 190 C/2,16 zwischen 0,5 und 10 g/10 Min., vorzugsweise zwischen 2 und 5 g/10 Min. liegen und einem Kristallit-Schmelzepunkt von ca. 125°C haben.

Geeignet zur Erzeugung der inneren, dünneren Polymerschicht ist auch Polyamid 12 mit einer Schmelzetemperatur von 172° bis 180°C und einer Viskositätszahl gemäß DIN 53 727 von 180-220 ml/g. Ferner kann Polyamid 11 einer Type mit einem Schmelzpunkt von 185°C und einem Viskositätsindex bei 25°C gemäß ISO R 307 von 160-210 verwendet werden.

Zur Herstellung der inneren, dünneren Polymerschicht können auch mechanische Abmischungen verschiedener Polymere verwendet werden. Hier sind im einzelnen die optimalen Schmelzindizes und Schmelzpunkte durch Versuche zu bestimmen und festzulegen. Gleiches gilt für die Verwendung von Copolymeren, die ebenfalls zur Herstellung der inneren, dünneren Polymerschicht verwendet werden können.

Die Funktion der reibungsmindernden Additive kann derart beschrieben werden, daß diese beim Reibvorgang aus der die Grenzfläche bestimmenden Oberflächenschicht der inneren, dünneren Polymerschicht abgenommen werden und an dem einzuziehenden Kabel, Rohr und dergleichen eine Gleitschicht aufbauen.

Die Mischung der Additive mit dem Polymeren zur Herstellung der inneren, dünneren Polymerschicht wird über die thermoplastische Phase hergestellt, wobei die Additive unter den gewählten Bedingungen nicht schmelzen, sondern als Feststoff eingebracht werden.

Hierbei findet eine chemische Verbindung zum polymeren Werkstoff nicht statt. Vielmehr sind diese Additive aufgrund ihrer unregelmäßigen Struktur rein mechanisch innerhalb der Polymerschicht gebunden. Werden dagegen flüsige Substanzen wie Silikonöl als Additive verwendet, so sind diese in Polymeren gelöst oder dispergiert.

Werden Additive wie Graphit oder Molybdändisulfid in die Polymerschicht eingemischt, so kann es hierbei zu einer Additivkonzentration von bis zu 40 Geweichtsprozent kommen. Der niedrigste Gewichtsanteil von Additiven, der bei der Verwendung von Polytetrafluorethylen oder Silikon erzielbar ist, sollte 5 Gewichtsprozent nicht unterschreiten. Bei einer Kombination von mehreren Additiven als reibungsmindernde Bestandteile in der inneren, dünneren Polymerschicht können prozentuale Anteile verwendet werden, die zwischen den genannten Grenzwerten angesiedelt sind.

Der erfindungsgemäße Rohraufbau ergibt eine innere Polymerschicht als Beschichtung des inneren Umfangs einer dickeren, äußeren Polymerschicht, wobei die innere Polymerschicht entsprechend den Anforderungen mit einer definierten Menge reibungsmindernder Additive versetzt ist. Schichtdicke und beigemengte Menge der Additive können dabei für den speziellen Verwendungszweck eingestellt werden. So ist es vorteilhaft, bei Rohren, die über die Zeitdauer ihrer Verwendung mehrfache Belegungsaktionen mit beispielsweise Kabeln und dergleichen erfahren, eine dickere Innenbeschichtung mit einem größeren Anteil von reibungsmindernden Additiven zu verwenden. Dagegen können Rohre, die nur einem einzigen Belegungsvorgang unterzogen werden, mit einer dünneren Innenschicht und entsprechend angepaßtem Additiv-Anteil versehen werden.

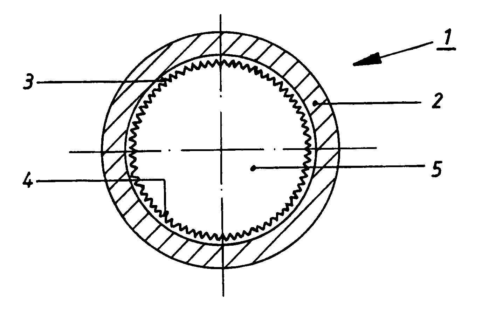

In der Zeichnung ist ein Querschnitt durch ein erfindungsgemäßes Rohr 1 schematisch dargestellt.

Das Rohr 1 besteht aus der äußeren, dickeren Polymerschicht 2 und der inneren, dünneren Polymerschicht 3. Die dünnere, innere Polymerschicht 3 weist in der gewählten Darstellung eine rippenartige Struktur 4 auf, in welche die Additive eingelagert sind. Die in der Zeichnung nicht dargestellten Kabel, Rohre und dergleichen, die in das Lumen 5 des Rohres 1 eingezogen werden, gleiten dabei auf den Spitzen der Profilierung 4 und entnehmen von dort die die Gleitschicht aufbauenden Additivanteile.

## Patentansprüche

1. Verfahren zur Herstellung eines Rohres (1) aus polymeren Werkstoffen zur Aufnahme von Einzügen, wie Kabeln, Rohren, und dergleichen, durch Koextrusion von zwei konzentrischen Polymerschichten (2, 3), wobei die innere Polymerschicht (3) mit reibungsmindernden Additiven versehen ist, dadurch gekennzeichnet, daß die äußere Polymerschicht als dickere Rohrwand mit einer über den inneren Umfang verlaufenden Profilierung extrudiert wird, und daß auf die innere Umfangsprofilierung der äußeren Polymerschicht (2) die mit den reibungsmindernden Additiven versehene innere, im Querschnitt dünnere Polymerschicht (3) aufextrudiert und durch Extrusionsverschweißen mit der äußeren Polymerschicht (2) fest verbunden wird, wobei die innere Polymerschicht (3) die Form der Innenprofilierung der äußeren Polymerschicht (2) annimmt.

2. Verfahren nach Anspruch 1, dadurch gekennzeichnet, daß die innere Polymerschicht (3) aus einem Polymeren mit annähernd gleicher Schmelzetemperatur wie die äußere Polymerschicht (2) besteht.

## Claims

1. Method of manufacturing a pipe (1) of polymer materials for accommodating inserts such as cables, pipes and similar objects by co-extruding two concentric polymer layers (2, d) whereby the inner polymer layer (3) is provided with friction-reducing additives, characterised by the fact that the outer polymer layer is extruded in the form of a thicker pipe wall with a profiled inner circumference and that the inner, narrower cross-sectioned polymer layer (3) provided with friction-reducing additives is extruded onto the inner circumferential profiling of the outer polymer layer (2) and firmly attached by extrusion welding to the outer polymer layer (2) whereby the inner polymer layer (3) assumes the form of the inner profiling of the outer polymer layer (2).

2. Method as described in claim 1 characterised by the fact that the inner polymer layer (3) consists of a polymer with virtually the same melt temperature as the outer polymer layer (2).

## Revendications

1. Procédé de fabrication d'un tube (1) en matériaux polyméres destine à recevoir des inserts tels que des câbles, des tubes et autres, par coextrusion de deux couches de polymères concentriques (2, 3), la couche de polymère intérieure (3) étant pourvue d'additifs antifriction. caractérisé par le fait que la couche de polymére extérieure est extrudée comme une paroi plus épaisse avec un profilage disposé sur la circonférence intérieure et que la couche de polymère intérieure (3) de section plus petite, pourvue d'additifs antifriction est extrudée sur le profilage en circonférence de la couche de polymère extérieure (2) et qu'elle est liée solidement par soudage à la couche de polymére extèrieure (2), la couche de polymère intèrieure (3) prenant la forme du profilage intérieur de la couche de polymère extérieure (2).

2. Procédé selon les revendication caractérisé par le fait que la couche de polymère intérieure (3) est constituée d'un polymère de mème tempèrature de fusion que la chouche de polymère extérieure (2).
